# EUROPEAN PATENT APPLICATION

(11) **EP 3 448 003 A1**
(43) Date of publication of application: **27.02.2019**
(21) Application number: 16899437.4
(22) Date of filing: 21.04.2016
(51) Int. Cl.: H04M 1/00, H04M 11/00, H04W 24/00

(54) **SUSPICIOUS-RADIO-WAVE SEARCH DEVICE**

(71) Applicant: Kobayashi, Yoshiro, Tokyo 107-0052 (JP)
(72) Inventor: Kobayashi, Yoshiro, Tokyo 107-0052 (JP)
(74) Representative: Green, Mark Charles
(86) International application number: PCT/JP2016/062688
(87) International publication number: WO 2017/183165

(57) **Abstract**

**[Problem]** To provide a suspicious-radio-wave search device comprising a wireless receiver and a smartphone or tablet provided with a suspicious-radio-wave analysis means. **[Solution]** The present invention is characterized in that a suspicious-radio-wave analysis means provided in a smartphone or tablet is provided with: a wireless-receiver search location input means; a detection condition setting means for setting a range and a signal level to be searched for; a detection condition instructing means for instructing a detection condition to a wireless receiver; a determination means for determining whether or not a radio wave inspected by the wireless receiver is a suspicious radio wave on the basis of a suspicious-radio-wave database stored in a smartphone memory; a specific-radio-wave detection means for identifying a suspicious radio wave to be inspected; and an audio output means for causing the wireless receiver or the smartphone or tablet terminal to output an audio signal of the reception result for the specific radio wave.

## Description

### [Field of the Invention]

The present invention is equipment which detects and analyzes a suspicious-radio-wave with the application in which the suspicious-radio-wave was installed by portable wireless receivers, the smart phones (Smartphone) or tablet computers, and these terminals, and discovers a wireless wiretap and wireless video voyeurism machine.

### [Background of the Invention]

Infringement of the leak of information according to a wireless wiretap and wireless video voyeurism machine also in an individual or privacy is a criminal act and a social problem as well as the major manufacturer or the research institution.

Then, it is required that a wireless wiretap and wireless video voyeurism machine should be discovered as infringement of a leak of information or privacy does not take place beforehand.

The inventor operates a wireless receiver with a smart phone or a tablet computer, It came to complete [whether the source of a suspicious-radio-wave can be discovered, and] the present invention as a result of research, reproducing the audio signal which scanned and carried out the external display of the electric wave received with the wireless receiver, specified the suspicious-radio-wave, and has ridden on the selected suspicious-radio-wave with a wireless receiver.

### [Citation List]

### [Patent literature]

[Patent document 1] JP 2015 - 159521A

### [Summary of Invention]

### [Problem to be solved by the invention]

The problem given to the present invention connects a portable wireless receiver controllable with a smart phone or a tablet computer, Control a wireless receiver by operating from a screen the electric wave of the audio signal received with the aforementioned wireless receiver using the application software installed in this with a smart phone or a tablet computer, and it scans a suspicious-radio-wave on the screen of a smart phone or a tablet computer, It is in providing the doubt searches-at-radio-frequencies equipment which restores to the specified suspicious-radio-wave, acquires an audio signal from a wireless receiver, and looks for a wireless wiretap or a wireless video voyeurism machine.

### [Means for solving problem]

In order to realize the object of this invention, it is by invention of Claim 1, In the doubt searches-at-radio-frequencies equipment which consists of a suspicious-radio-wave analysis means provided by the smart phone or tablet computer by which the wireless receiver is connected with the wireless receiver which can receive a radio wave controllable with a wireless communication system, and the smart phone or tablet computer,
For a suspicious-radio-wave analysis means,
The search place input means which inputs the search place of a radio wave,
A detection condition setting-out means to set a signal level to the range for which it searches,
The detection condition directing means which instructs reception by the set-up detection condition to a wireless receiver via a wireless communication,
A means to input into a smart phone or a tablet computer the data of an electric wave for which the wireless receiver looked,
The judgment means which judges whether the input data of an electric wave is corresponded to a suspicious-radio-wave based on the suspicious-radio-wave database memorized by the memory, The suspicious-radio-wave displaying means which displays the data of the electric wave judged by the judgment means to be a suspicious-radio-wave on the display of a smart phone or a tablet computer,
The specific electric wave detection means which chooses one of the data of the displayed electric wave, and makes the data of the one electric wave receive with a wireless receiver,
It has a voice output means to which a wireless receiver, a smart phone, or a tablet computer is made to output the audio signal of the received result of a specific electric wave.

By invention of Claim 2,
Connect the aforementioned smart phone or a tablet computer with a managing server via the Internet, and. The various data input into the operation history and smart phone, or tablet computer to the smart phone or the tablet computer is recorded automatically on a time series with date data at the memory on a managing server.

### [Effect of the Invention]

In the above-mentioned composition, a user transmits the information on the frequency and signal strength which were installed in the place which wants to prevent a leak of information and invasion of privacy with a wireless wiretap and wireless video voyeurism machine, and were detected by the continuation search to the suspicious-radio-wave analysis means of a mobile phone, and the doubt searches-at-radio-frequencies equipment of the present invention searches for a suspicious-radio-wave.

It is transmitted to the Internet server connected with the mobile phone, and the suspicious-radio-wave for which it was searched deduces doubt wave frequencies from the database memorized by the memory, and updates the database to which the specific frequency of a new suspicious-radio-wave was added.

The updated database is updated by upgrading mobile phone software, and the user can check that search specific frequency always anywhere simply for a short time, and a wireless wiretap and wireless video voyeurism machine are not devised.

### [Brief Description of the Drawings]

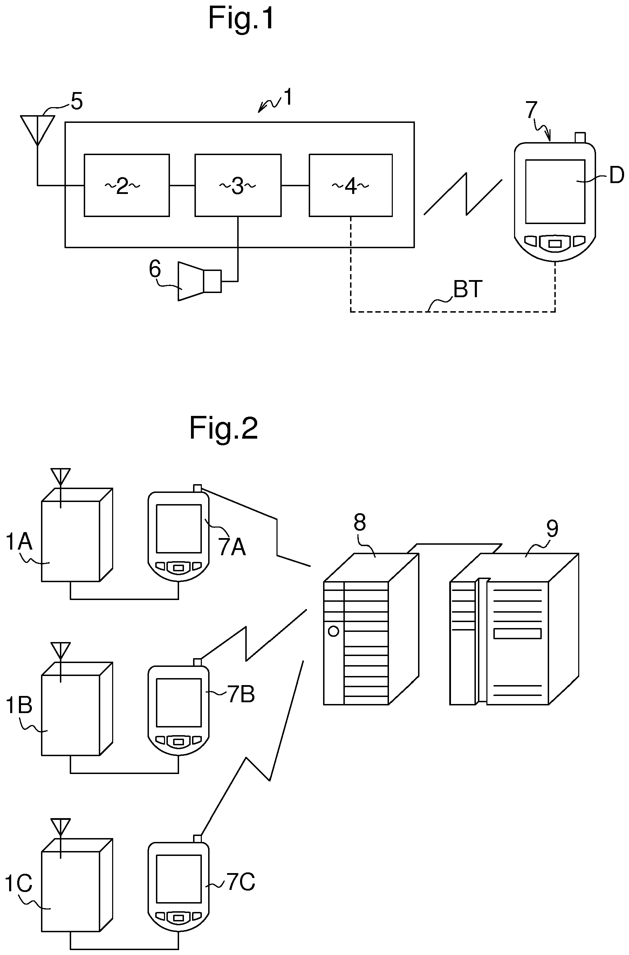

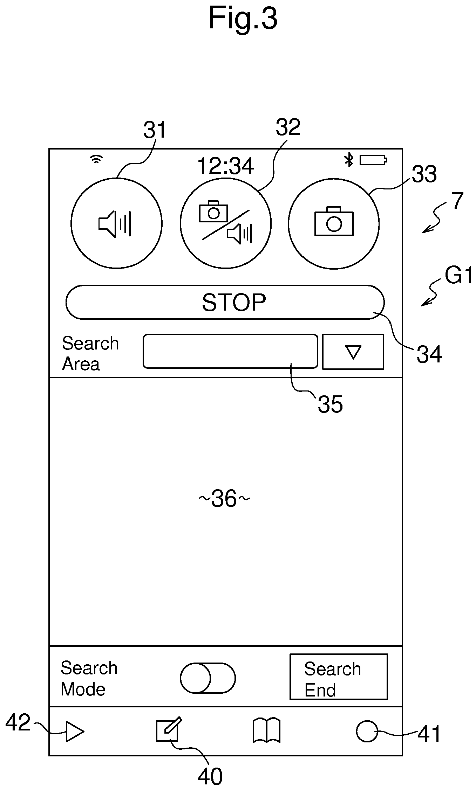

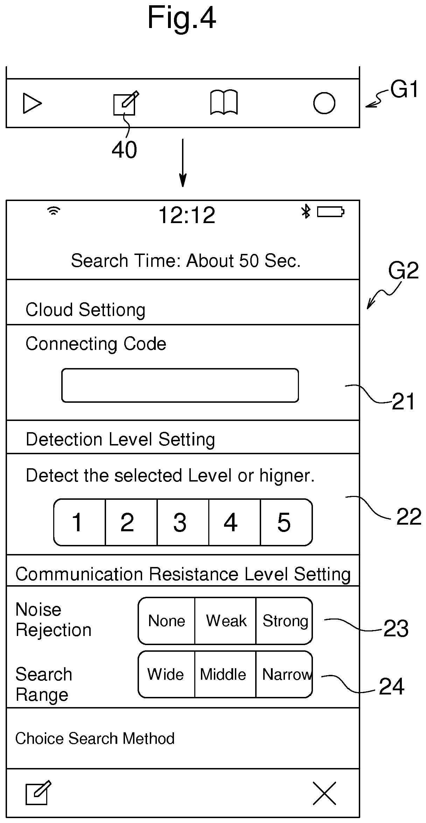

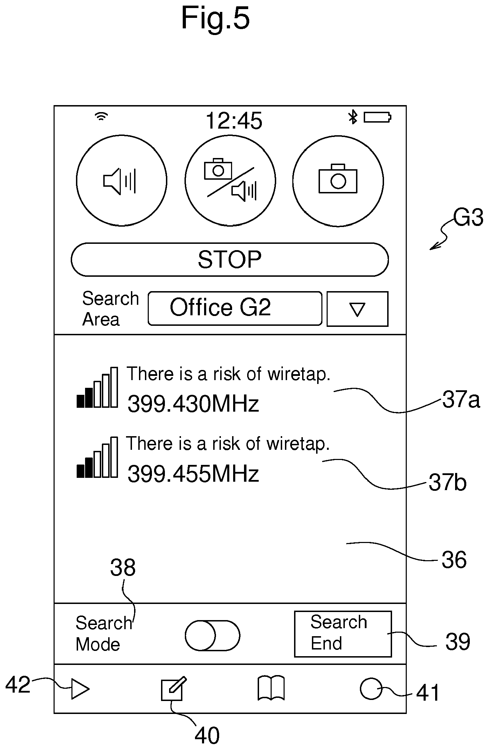

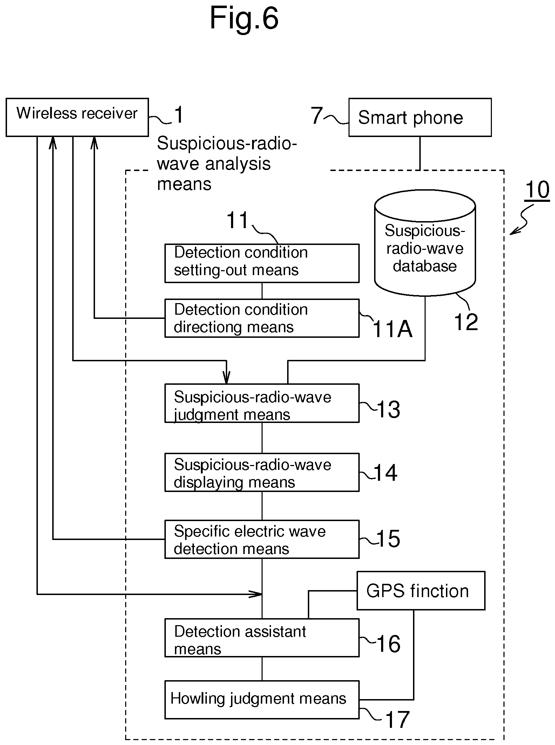

A [FIG. 1] It is the figure showing the embodiment of the information collection system by the present invention, and a smart phone.
A [FIG. 2] It is the figure showing the composition of the information collection system and suspicious-radio-wave analyzing system by the present invention, and the all Users transmission system.
A [FIG. 3] It is a front view showing the screen before search of a mobile phone.
A [FIG. 4] It is a front view of the screen of a mobile phone in which the inspection result of a suspicious-radio-wave is shown.
A [FIG. 5] It is a front view of the setting screen of the mobile phone which sets up a verification condition.
A [FIG. 6] It is a block diagram of suspicious-radio-wave analysis means.

### [Description of Embodiments]

Below, the Example of the present invention is described, while referring to Drawings.

### [Work example 1]

Fig.1 shows the doubt searches-at-radio-frequencies equipment of the present invention, consists of the portable wireless receiver 1 and the smart phone 7, and shows the block diagram which connected both by wireless.

Fig.2 is a block diagram which consists of a plurality of doubt searches-at-radio-frequencies equipment, an Internet (cloud) managing server 8, and a computer that has the server application 9, and constitutes an information collection system, a suspicious-radio-wave analyzing system, and the all Users transmission system.

In this invention, the tablet computer which has not only a smart phone but the same function to have the microcomputer composition in which Internet communication is possible may be used.

In Fig.1, the doubt searches-at-radio-frequencies equipment 20 comprises the portable wireless receiver 1 and the smart phone 7, and a user usually uses it for both, possessing. "EGM-2012iSPA" (techno energy incorporated company manufacture) is used for the wireless receiver 1 as an operational wireless receiver and an example with a Bluetooth (registered trademark) communication method, for example.

As long as both apparatuses is corresponding, not only aforementioned Bluetooth but wireless LAN may be used for the wireless control to the wireless receiver 1.

This wireless receiver 1 consists of computer configurations.

The antenna 5, the receiving section 2 connected to the antenna 5, and CPU3 which control the wireless receiver 1, It consists of a wireless communication function for transmitting and receiving a control signal and detected data of a wireless receiver, the wireless communication function 4 according to a Bluetooth (registered trademark) communication method at this example, and the speaker 6 that makes an audio signal a detected signal and may output it.

On the other hand, also in the smart phone 7, it has the wireless communication function BT by a Bluetooth (registered trademark) communication method in the wireless communication function and this example in which it corresponds to the wireless communication function 4 of the wireless receiver 1.

The application software as the suspicious-radio-wave analysis means 10 is installed in the smart phone 7 as application software.

And in the suspicious-radio-wave analysis means 10, a control signal is output to the wireless receiver 1 from the conditioning and the smart phone 7 of the receiving pair elephant by the wireless receiver 1, A suspicious-radio-wave can be extracted from the information on the electric wave which the wireless receiver 1 received, and an external display can be carried out now to the display D of the smart phone 7.

The suspicious-radio-wave analysis means 10 has the detection condition setting-out means 11 to set up the conditions of the frequency band which the wireless receiver 1 receives, and the detection condition directing means 11A which transmits a control signal to the wireless receiver 1 via Bluetooth based on the set-up detection condition, as Fig.6 shows.

And the data (frequency, a level, etc.) of the received result which the wireless receiver 1 received is output to the smart phone 7 via Bluetooth.

If the smart phone 7 inputs the data of the aforementioned received result, the suspicious-radio-wave judgment means 13 will check with the suspicious-radio-wave database 12 memorized by the memory of the smart phone 7, and it will be judged whether it is a suspicious-radio-wave.

If judged with a suspicious-radio-wave, the data of all the judged suspicious-radio-waves will be displayed on the display column 36 of the below-mentioned detection screen G1 by the screen of the smart phone 7, and an illustrated example by the suspicious-radio-wave displaying means 14. An indication signal is output to the wireless receiver 1 so that the suspicious-radio-wave which specified the electric wave when the number of the data of the judged suspicious-radio-wave was one, appropriately chose one of them, specified it when it was plurality, and was specified by the wireless receiver 1 by the specific electric wave detection means 15 may be detected.

If this indication signal is received via Bluetooth, the wireless receiver 1 will resume reception and will look for a wiretap etc.

When the sound source of the suspicious-radio-wave was not a wiretap and it is guessed or checked, the following suspicious-radio-wave in a plurality of suspicious-radio-waves may be chosen, and it may search similarly.

In this example, if "memo writing mark" 40 in the bottom are clicked on the detection screen G1 (refer to Fig.3) of the suspicious-radio-wave analysis means 10 displayed on the display of the smart phone 7, the receiving condition setting screen G2 (refer to Fig.4) will appear.

In this receiving condition setting screen G2, "input column of connecting code" 21 are provided by the upper stage as "cloud setting."

It is connected to the managing servers 8 and 9 on the Internet in inputting a predetermined code into this input column 21 by the Internet communication function which the smart phone 7 has, It becomes the memory set as the managing servers 8 and 9 memorizable with time about data and the received data of an event relevant to the radio receiving and suspicious-radio-wave analysis of the smart phone 7 by which string attachment was carried out [aforementioned].

The "detection level setting-out" column 22 is provided by middle stage of the aforementioned screen G2.

Strength of a detection level of an electric wave of the wireless receiver 1 is set up.

In an illustrated example, it is divided into five steps from one to five, and one level of them can be chosen now.

A column of "communication resistance level setting" is provided by lower stage.

There are the column 23 of "noise rejection" and the column 24 of a "search range."

The column of "noise rejection" sets up the strength of noise rejection (squelch setting out), and there are three kinds, "none," "weak," and "strong," in an illustrated example.

The column of a "search range" is a thing of the frequency band of a search range which carries out size setting out (attenuator setting out) -- an illustrated example -- it is divided into three kinds, "wide," "middle," and "narrow."

The receiving condition set up in the above-mentioned receiving condition setting screen is memorized by the memory of the smart phone 7.

After the above-mentioned setting out is completed next, in the aforementioned detection screen G1 of Fig.3, "Speaker mark" 31 for receiving the zone of a voice doubt signal on the upper stage, The speaker / "camera mark" 32 for receiving the zone of both a voice doubt signal and an image doubt signal, "Camera mark" 33 for receiving the zone of an image doubt signal are displayed, Depress one out of the above-mentioned button, and it limits the object range of received frequency, Under the receiving pair elephant limited simultaneously, according to the receiving condition (a level, noise rejection, search range) set up in the aforementioned receiving condition setting screen G2, set up a reception range and by the aforementioned detection condition directing means 11A, CPU3 of the wireless receiver 1 is controlled via Bluetooth 4 and BT, and reception with the wireless receiver 1 is started.

With the wireless receiver 1, the data of the radio wave signal detected by the basis of the aforementioned receiving condition is transmitted to the smart phone 7 side via Bluetooth 4 and BT.

The "stop" button 34 is shown under the aforementioned speaker mark 31 or the camera mark 33 by the aforementioned detection screen G1.

Reception by the wireless receiver 1 is stopped by depressing the stop button 34.

Under the stop button 34, the input column 35 of an inspecting place which detects is provided.

A user inputs arbitrarily.

The input of this inspecting place may input the current position of the smart phone 7 using the GPS function of the smart phone 7.

The display column 36 which displays the received result by the wireless receiver 1 is provided by the middle stage of the detection screen G1.

In this example, as shown in detection result screen G3, the list of the received results of received different frequency is displayed on the display column 36 by the suspicious-radio-wave displaying means 14.

In detection result screen G3 shown in Fig.5, (1) 399.430MHz (level 2) 37a and (2) 399.455MHz (level 2) 37b are displayed.

Then, a user depresses the column (37a or 37b) of frequency to specify and search for based on the above-mentioned received result.

By this, an indication signal is output so that it may limit to the above-mentioned frequency and the specific electric wave detection means 15 may receive from the smart phone 7 to the wireless receiver 1, and reception of specific frequency is performed by the wireless receiver 1.

It gets over and the radio signal of this received frequency is output as an audio signal from the speaker 6 of the wireless receiver 1.

Then, where the wireless receiver 1 and the smart phone 7 are possessed, the user can move, while hearing the sound output from the speaker 6 of the wireless receiver 1, he can discover the place of a sound source by looking for the part which carries out [sound] howling, and can judge whether it is a wiretap.

It may change to the voice response from the wireless receiver 1, or voice response, and may make a sound output via direct or an earphone, or headphone in this invention from the speaker (not shown) of the smart phone 7.

In this invention, the detection assistant means 16 to detect the wiretap which serves as a sound source using the GPS function which the smart phone 7 has may be provided (refer to Fig.6) .

The detection assistant means 16 depresses the detection assist button which was provided by the detection screen of the smart phone 7 and which is not illustrated, when reception of specific frequency is performed by the aforementioned wireless receiver 1.

By changing and receiving the receiving position or direction of the wireless receiver 1 as integrally as the smart phone 7, when a current position is displayed using the GPS function of the smart phone 7 and the wireless receiver 1 receives the signal of specific frequency by this, A high-level position and direction are relatively displayed on the display D of the smart phone 7 out of a plurality of signals which were related with the position and direction which detected the received result by the aforementioned GPS function, and were memorized and received.

The detecting direction of a sound source can be made to presume from a relative comparison by displaying the point which displayed the mark to which it corresponded to the reception level in it as a plurality of detection points on the map data of the smart phone 7 when displaying, or received the signal of the highest level.

The howling judgment means 17 which judges whether the received signal is howling may be provided.

And if it judges with the aforementioned signal being howling, the external display which detected howling will be carried out to the smart phone 7.

For example, the mark which shows howling generating may be displayed on the map data of the smart phone 7 as an example of an external display, and it may be sufficient for regardless of / outputting an alarm signal from the smart phone 7.

It changes into the external display of the smart phone 7, or this, and may make the sound of actual howling output from the speaker 6 of the wireless receiver 1.

Thereby, the largest sound-source part of howling can be investigated and it is judged whether the sound source is a wiretap.

As mentioned above, a user investigates the sound-source place of the selected received result, when it is judged that it is not dispatch from a wiretap, chooses and depresses the received result of frequency which is different from the aforementioned display column 36, and performs the same search as the above.

Thus, it can search for the electric wave of all the frequency displayed as a received result.

Since a possibility of being the same sound source is high when frequency approximates, it is preferable to choose frequency with a fixed number of differences.

Or when it is within the scope with constant frequency, it may judge with the same sound source.

The button 38 and the search end button 39 of the search mode are provided by lower stage of the display column 36.

By depressing the search end button 39, the aforementioned received result is reset and is eliminated from on a screen.

The signal of the specified frequency is memorizable in the memory of the smart phone 7 by depressing the sound recording button 41 provided by the bar of the bottom.

That is, the list of sound recording place track numbers which can be recorded by depression of the sound recording button 41 is displayed, and sound recording of a definite period of time (for example, 8 seconds) is performed to the track number by choosing one track number from the lists (not shown).

Playback can be begun by depressing that the list of recorded track numbers is displayed and there is a track number to play by depressing the reproduction button 42 similarly.

In the above-mentioned Example, although investigation with the frequency band of a wiretap was shown in the example, investigation with the frequency band of a video voyeurism machine (image) also becomes the same.

However, since an image cannot be displayed with the wireless receiver 1 about an image, the place of a video voyeurism machine will be searched only with an audio signal.

Since other composition is the same as that of the aforementioned Example, a description is omitted.

In Fig.2, a plurality of doubt searches-at-radio-frequencies equipment 20 (referred to as 1A, 7A and 1B, and 7B, 1C and 7C in the expedient top of a description and Fig.2) which consists of the wireless receiver 1 and the smart phone 7 is installed in the place to search for a suspicious-radio-wave, respectively.

In this case, the same detection condition is set to each smart phone 7A-7C, the wireless receivers 1A-1C operate on the same conditions, and a received result is output to each smart phone 7A-7C. It is transmitted to the managing server 8 via the Internet, and the data of a received result which the smart phones 7A-7C input is memorized by the memory.

In the above-mentioned managing server 8, the doubt searches-at-radio-frequencies equipment 20 of the highest-level received result about respectively specific frequency is judged based on the result input from each doubt searches-at-radio-frequencies equipment 20.

About the doubt searches-at-radio-frequencies equipment 20 which became the highest-level received result by judgment, like the aforementioned Example, a sound can be output, either of the wireless receivers 1A-1C can be searched for the part which carries out howling, for example, and wiretaps can be discovered.

Since other composition is the same as that of the aforementioned Example, the description is omitted.

The database 12 of the suspicious-radio-wave in the suspicious-radio-wave analysis means 10, Put in a database based on specific frequency of a wiretap marketed or a wireless transmitter usable as a video voyeurism machine, and a frequency band, It is divided into a region where voice frequency is contained, and a region to which a picture frequency is contained, and a frequency band with which it is assumed for every above-mentioned wireless transmitter in each region is recorded further individually.

If new apparatus is manufactured and new specific frequency arises, this will be added to the aforementioned database 12, and will be recorded, and a database will be updated. And when upgrading by the software of the smart phone which is the suspicious-radio-wave analysis means 10, the database 12 of a suspicious-radio-wave including a new suspicious-radio-wave can be updated.

### [Industrial applicability]

The present invention is a security system for the company which wants to prevent a leak of information and invasion of privacy with a wireless wiretap and wireless video voyeurism machine, or individuals.

### [Explanations of letters or numerals]

1 wireless receiver
2 Receiving section
3 CPU
4 The wireless communication function of a wireless receiver end
5 Antenna
6 Speaker
7 Smart phone
8 The managing server 8 on the Internet
9 Server application
10 Suspicious-radio-wave analysis means
11 Detection condition setting-out means
12 Suspicious-radio-wave database
13 Suspicious-radio-wave judgment means
14 Suspicious-radio-wave displaying means
15 Specific electric wave detection means
16 Detection assistant means
17 Howling judgment means
20 Suspicious-radio-wave search device
21 The input column of a connecting code
22 Detection level setting field
23 Noise rejection column
24 Search range column
31 Speaker mark
32 A speaker / camera mark
33 Camera mark
34 Stop button
35 The input column of a detection place
36 Display column
37a and 37b Received result of frequency
38 The button of the search mode
39 Search end button
40 Memo writing mark
41 Sound recording button
42 Reproduction button
BT Wireless communication function on the smart phone side
D Display
G1 Detection screen
G2 Receiving condition setting screen
G3 Detection result screen

## Claims

1. Suspicious-radio-wave search device which consists of a suspicious-radio-wave analysis means provided by a smart phone or a tablet computer by which the wireless receiver is connected with a wireless receiver which can receive a radio wave controllable with a wireless communication system, and the smart phone or tablet computer,
For a suspicious-radio-wave analysis means,
A search place input means which inputs a search place of a radio wave,
A detection condition setting-out means to set a signal level to a range for which it searches,
A detection condition directing means which instructs reception by a set-up detection condition to a wireless receiver via a wireless communication,
A means to input into a smart phone or a tablet computer data of an electric wave for which a wireless receiver looked,
A judgment means which judges whether input data of an electric wave is corresponded to a suspicious-radio-wave based on a suspicious-radio-wave database memorized by memory,
A suspicious-radio-wave displaying means which displays data of an electric wave judged by a judgment means to be a suspicious-radio-wave on a display of a smart phone or a tablet computer,
A specific electric wave detection means which chooses one of the data of a displayed electric wave, and makes data of the one electric wave receive with a wireless receiver,
Doubt searches-at-radio-frequencies equipment having a voice output means which makes an audio signal of a received result of a specific electric wave output to a wireless receiver, a smart phone,
or a tablet computer.

2. Suspicious-radio-wave search device,
which connect the aforementioned smart phone or a tablet computer with a managing server via the Internet, and, suspicious-radio-wave search device recording automatically various data input into an operation history and a smart phone, or a tablet computer to a smart phone or a tablet computer on a memory on a managing server with date data at a time series.

3. Suspicious-radio-wave search device according to claim 1 or 2,
which suspicious-radio-wave search device are in cooperation with a GPS function which detects a position of a smart phone or a tablet computer, and,
which provides a detection assistant means to display a result of having judged a high-level position or a direction out of a plurality of signals which received on a display of a smart phone or a tablet computer, and is **characterized by** things, when a wireless receiver receives a signal of specific frequency, a receiving position or a direction of the received result and smart phone or a tablet computer, and a wireless receiver into which a position or a direction is changed integrally is associated, and it memorizes.

4. Suspicious-radio-wave search device according to claim 1 or 3,
which a speaker of a wireless receiver, currently providing a howling judgment means to which a signal of an external display of howling detection with a display or a speaker of a smart phone or a tablet computer is made to output, when a reception signal is judged to be howling.
